# EUROPEAN PATENT APPLICATION

(11) **EP 4 844 790 A1**
(43) Date of publication of application: **25.11.2026**
(21) Application number: 25741767.5
(22) Date of filing: 09.01.2025
(51) Int. Cl.: H01F 38/14, H01F 27/28, H02J 50/10

(54) **COIL ASSEMBLY**

(30) Priority: 18.01.2024 JP 2024005765
(71) Applicant: DENSO CORPORATION, Kariya-city, Aichi 448-8661 (JP)
(72) Inventor: TAKITA, SHIMPEI, Kariya- city, Aichi 4488661 (JP); TAKAHASHI, EISUKE, Kariya- city, Aichi 4488661 (JP)
(74) Representative: TBK
(86) International application number: PCT/JP2025/000478
(87) International publication number: WO 2025/154635

(57) **Abstract**

A coil assembly (100, 101, 102) includes coil layers (S1, S2, S11, S12, S21, S22) stacked along a stack direction. Each of the coil layers includes planar coils (1 to 8, 1 to 10, 1 to 12). Each of the planar coils is wound in a direction of a predetermined plane. The predetermined plane intersects the stack direction. The planar coils are connected in parallel to one another. The planar coils included in the coil layers constitute a plurality of coil members connected in parallel to one another. Each of the coil members includes at least one of the planar coils included in the coil layers. At least part of the coil layers includes at least one first-pitch wire pair including paired adjacent wires having a first pitch therebetween, and at least one second-pitch wire pair including paired adjacent wires having a second pitch that is greater than the first pitch. The at least one first-pitch wire pair is located outward of the at least one second-pitch wire pair in a direction of a width of the at least part of the coil layers.

## Description

### CROSS-REFERENCE TO RELATED APPLICATION

The present application is based on and claims priority to Japanese Patent Application No. 2024-005765 filed on January 18, 2024, the disclosure of which is incorporated herein by reference.

### TECHNICAL FIELD

The present disclosure relates to a coil assembly.

### BACKGROUND

Conventionally, coil assemblies, each of which includes multiple layers of planar coils, have been used. When such a coil assembly is used together with a magnetic member, such as a magnetic sheet, the planar coils have different self-inductances depending on their distances from the magnetic member.

The coil assembly includes multiple coil members connected in parallel, each of which is comprised of a single planar coil or multiple planar coils connected in series. In this configuration, the different self-inductances of the planar coils may result in the coil members having different impedances from one another. This impedance variation may cause current concentration to occur in some of the coil members, leading to increased coil losses. From this viewpoint, patent literature 1 discloses a technology in which the line length of each planar coil is set longer in a coil layer located at a greater distance from the magnetic member. This aims to reduce the difference in impedance among the coil members.

### CROSS-REFERENCES

Patent Literature 1 Japanese Patent Application Publication No. 2019-186303

### SUMMARY

The mutual inductances among the coil members in such a coil assembly may affect the impedance of each coil member. However, the above-described technology disclosed in the patent publication, which adjusts the line length of each planar coil in accordance with the distance thereof from the magnetic member, does not take into account the mutual inductances among the coil members. Consequently, there may be still a possibility that the impedances of the coil members differ from one another.

Such a problem may also occur not only in a configuration that uses the coil assembly together with the magnetic member but also in a configuration that uses the coil assembly without the magnetic member. For example, such a problem may occur in a coil assembly in which planar coils included in different coil layers are connected in series to constitute a single coil member, and multiple such coil members are connected in parallel. Under these circumstances, it is desirable to provide a technology capable of further suppressing current imbalance among the coil members.

The present disclosure can be implemented as an exemplary aspect described below.

A coil assembly according to the exemplary aspect includes a plurality of coil layers stacked along a stack direction. Each of the coil layers includes a plurality of planar coils. Each of the planar coils is wound in a direction of a predetermined plane. The predetermined plane intersects the stack direction, the planar coils being connected in parallel to one another. The planar coils included in the coil layers constitute a plurality of coil members connected in parallel to one another. Each of the coil members includes at least one of the planar coils included in the coil layers. At least part of the coil layers includes at least one first-pitch wire pair including paired adjacent wires having a first pitch therebetween, and at least one second-pitch wire pair including paired adjacent wires having a second pitch that is greater than the first pitch. The at least one first-pitch wire pair is located outward of the at least one second-pitch wire pair in a direction of a width of the at least part of the coil layers.

The coil assembly according to the exemplary aspect is configured such that the at least part of the coil layers includes the at least one first-pitch wire pair including the paired adjacent wires having the first pitch therebetween, and the at least one second-pitch wire pair including the paired adjacent wires having the second pitch that is greater than the first pitch. The at least one first-pitch wire pair is located outward of the at least one second-pitch wire pair in the direction of a width of the at least part of the coil layers.

This configuration therefore enables the mutual inductance between the coil members located inward in the direction of the width of the at least part of the coil layers to be reduced than the mutual inductance between the coil members located outward in the direction of the width of the at least part of the coil layers. This makes it possible to mitigate differences in impedance between the coil members located inward in the direction of the at least part of the coil layers and the coil members located outward in the direction of the at least part of the coil layers, thereby suppressing current bias among the coil members.

### BRIEF DESCRIPTION OF THE DRAWINGS

Other aspects of the present disclosure will become apparent from the following description of embodiments with reference to the accompanying drawings in which:
Fig. 1 is an exploded plan view illustrating a schematic configuration of a coil assembly according to the first embodiment of the present disclosure;
Fig. 2 is a block diagram illustrating a schematic configuration of a wireless power transfer system to which the coil assembly according to the first embodiment is applied;
Fig. 3 is an explanatory diagram illustrating an equivalent circuit of the coil assembly according to the first embodiment;
Fig. 4 is a partially cross-sectional view of the coil assembly according to the first embodiment;
Fig. 5 is an explanatory diagram for explaining an impedance of each coil member in the coil assembly according to the first embodiment;
Fig. 6 is a partially cross-sectional view of a coil assembly according to Comparative Example 1;
Fig. 7 is an explanatory diagram representing the results of numerical analysis of various parameters concerning the impedances of each of the coil assembly according to Example 1 and the coil assembly according to Comparative Example 1;
Fig. 8 is a partially cross-sectional view of a coil assembly according to the second embodiment;

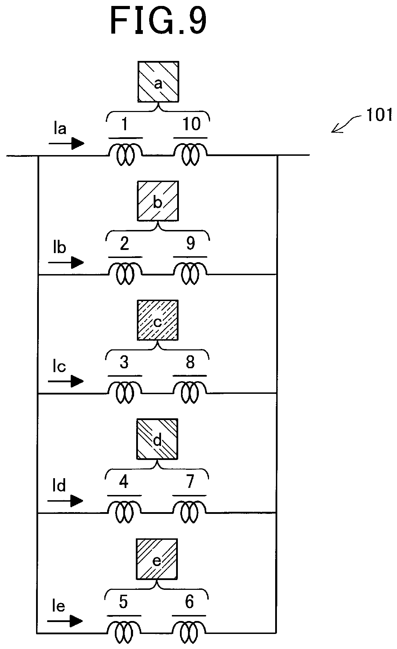

Fig. 9 is an explanatory diagram illustrating an equivalent circuit of the coil assembly according to the second embodiment;
Fig. 10 is a partially cross-sectional view of a coil assembly according to Comparative Example 2;
Fig. 11 is an explanatory diagram representing the results of numerical analysis of various parameters concerning the impedances of each of the coil assembly according to Example 2 and the coil assembly according to Comparative Example 2;
Fig. 12 is an exploded plan view illustrating a schematic configuration of a coil assembly according to the third embodiment; and
Fig. 13 is a partially cross-sectional view of the coil assembly according to the third embodiment.

### DETAILED DESCRIPTION OF EMBODIMENTS

### First embodiment

### OVERALL CONFIGURATION

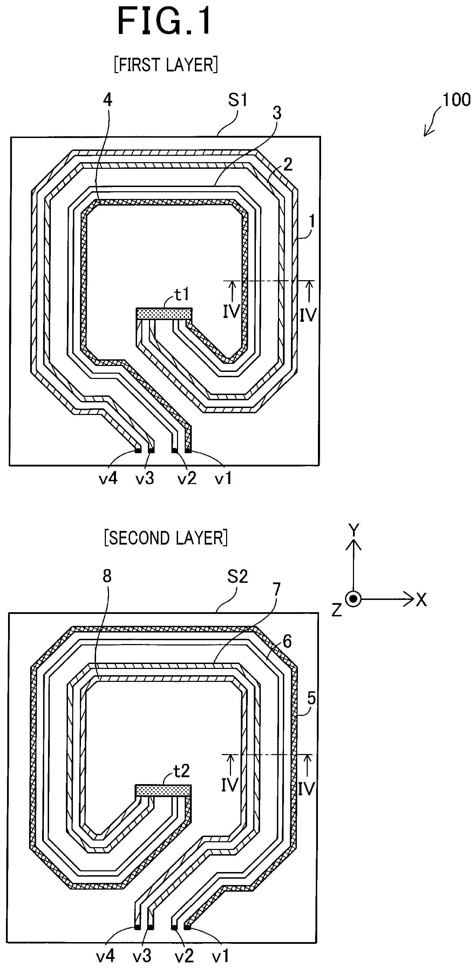

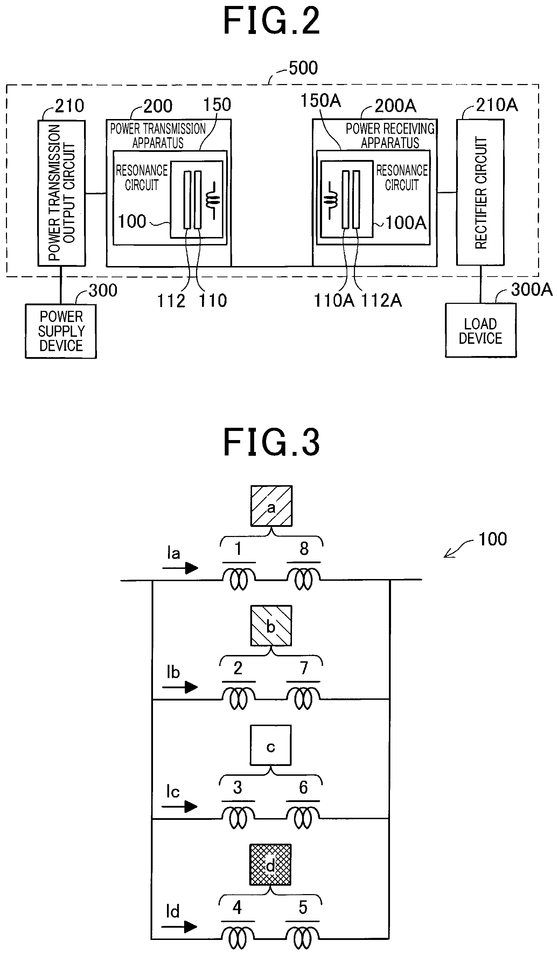

Referring to Fig. 1, a coil assembly 100 of the first embodiment includes a first coil layer S1 and a second coil layer S2. The coil assembly 100 constitutes a coil (an inductor) as a whole. The coil assembly 100 of the first embodiment can be used in a wireless power transfer system 500 illustrated in Fig. 2. The detailed configuration of the coil assembly 100 will be described later.

The wireless power transfer system 500 includes a power transmission apparatus 200, a power receiving apparatus 200A, a power supply device 300, and a load device 300A electrically connected to the power receiving apparatus 200A. In the wireless power transfer system 500, power supplied from the power supply device 300 is wirelessly transmitted from the power transmission apparatus 200 to the power receiving apparatus 200A, and the power received by the power receiving apparatus 200A is supplied to the load device 300A.

Referring to Fig. 2, the power transmission apparatus 200 includes a power resonance circuit 150 that includes the coil assembly 100. The power receiving apparatus 200A includes a resonance circuit 150A that includes a receiver coil assembly 100A. The wireless power transfer system 500 additionally includes a power transmission output circuit 210 and a rectifier circuit 210A.

The resonance circuit 150 includes a non-illustrated capacitor and the coil assembly 100 serving as an inductor connected in series to the capacitor. The power transmission apparatus 200, which includes the resonance circuit 150, is configured to perform wireless power transfer to the power receiving apparatus 200A using power supplied from the power transmission output circuit 210.

The power transmission output circuit 210 includes an inverter and a filter circuit, neither of which is shown, and is configured to convert direct-current (DC) power supplied from the power supply device 300 into alternating-current (AC) power having a predetermined operating frequency. The power transmission output circuit 210 is additionally configured to remove noise components from the AC power, and supply, to the power transmission apparatus 200, the AC power from which the noise components have been removed.

The coil assembly 100 includes a magnetic member 110 and a shield member 112. The magnetic member 110, which is made of magnetic material, such as ferrite, has a thin plate-like shape. As illustrated in Fig. 2, the magnetic member 110 and the shield member 112 are arranged on a first side of the coil assembly 100 opposite to a second side of the coil assembly 100 facing the receiver coil assembly 100A. The magnetic member 110 causes magnetic flux induced in the coil assembly 100 to be directed more efficiently toward the receiver coil assembly 100A. This increases the magnetic flux through the receiver coil assembly 100A.

The shield member 112, which is made of aluminum or an aluminum alloy, has a plate-like shape. The shield member 112 has a shield function of preventing the leakage of magnetic flux induced in the coil assembly 100. Additionally, the shield member 112 is operative to dissipate heat generated in the coil assembly 100. The shield member 112 may be formed of a metallic plate made of copper or another metal in place of aluminum or an aluminum alloy. The other detailed configurations of the coil assembly 100 will be described later. The coil assembly 100 may not include the magnetic member 110 and the shield member 112.

The receiver coil assembly 100A serves as an inductor that constitutes a part of the resonance circuit 150A included in the power receiving apparatus 200A. The configuration of the receiver coil assembly 100A is identical to that of the coil assembly 100 described in detail later. Like the coil assembly 100, the receiver coil assembly 100A includes a receiver magnetic member 110A and a shield member 112A. The receiver magnetic member 110A has a configuration similar to that of the magnetic member 110. The shield member 112 has a configuration similar to that of the shield member 112.

The resonance circuit 150A of the power receiving apparatus 200A includes a non-illustrated capacitor and the coil assembly 100 serving as an inductor connected in series to the capacitor. While power is supplied to the power transmission apparatus 200, the resonance circuit 150 of the power transmission apparatus 200 resonates at a predetermined operating frequency to generate magnetic flux.

This magnetic flux passes through the receiver coil assembly 100A of the power receiving apparatus 200A, causing an electromotive force to be induced in the receiver coil assembly 100A of the power receiving apparatus 200A. This results in power transfer being established from the power transmission apparatus 200 to the power receiving apparatus 200A.

The rectifier circuit 210A, which includes a bridge circuit and a smoothing capacitor, is configured to convert AC power based on the electromotive force into DC power, and supply the DC power to the load device 300A.

The power transmission output circuit 210 and the power transmission apparatus 200 of the wireless power transfer system 500 configured as set forth above may be located, for example, under the ground or on the surface of the ground. In addition, the power receiving apparatus 200A, the rectifier circuit 210A, and the load device 300A may be mounted, for example, to a mobile object, such as an electric vehicle. That is, the wireless power transfer system 500 may be used to supply power to the mobile object that is running. In this configuration of the wireless power transfer system 500, a battery and/or a motor installed in the mobile object correspond to the load device 300A.

### DETAILED CONFIGURATION OF COIL ASSEMBLY 100

The first coil layer S1 and the second coil layer S2 of the coil assembly 100 illustrated in Fig. 1 are stacked along a Z axis. Specifically, the first coil layer S1 and the second coil layer S2 are stacked in this order in the positive Z-axis direction. More specifically, the direction along the Z axis corresponds to a stack direction according to the present disclosure. In Fig. 1, an X axis, a Y axis, and the Z axis, which are orthogonal to one another, are illustrated, and the X, Y, and Z axes in Fig. 1 correspond to those in the other drawings. The direction from the power transmission apparatus 200 to the power receiving apparatus 200A in Fig. 2 corresponds to the positive direction Z-axis direction. In Fig. 1, the magnetic member 110 and the shield member 112 are omitted.

Each of the first and second coil layers S1 and S2 includes a plurality of planar coils that are each formed of a wire wound along the X-Y plane. In the first embodiment, the wire is made of copper foil. The number of the planar coils included in each of the first and second coil layers S1 and S2 is 4, that is, an even number. Each of the first and second coil layers S1 and S2 includes insulators, such as prepreg insulators, and is configured such that the prepreg insulators are sandwiched between a respective pair of the patterns of the planar coils. The planar coils of the coil assembly 100 located outermost in the direction of the Z axis, which constitute the outer surfaces of the coil assembly 100, may be covered with solder resist.

The first coil layer S1 includes a first planar coil 1, a second planar coil 2, a third planar coil 3, and a fourth planar coil 4. The second coil layer S2 includes a fifth planar coil 5, a sixth planar coil 6, a seventh planar coil 7, and an eighth planar coil 8. The number of turns of each planar coil 1 to 8 is 1, but may be set to any number.

The coil assembly 100 includes four through-hole vias v1, v2, v3, and v4 formed through the first and second coil layers S1 and S2. Each of the fourth and fifth planar coils 4 and 5 has a first end connected to the through-hole via v1. Each of the third and sixth planar coils 3 and 6 has a first end connected to the through-hole via v2. Each of the second and seventh planar coils 2 and 7 has a first end connected to the through-hole via v3. Each of the first and eighth planar coils 1 and 8 has a first end connected to the through-hole via v4.

The first coil layer S1 includes a connection terminal portion t1 located at the central portion thereof, and the second coil layer S2 includes a connection terminal portion t2 located at the central portion thereof.

The opposite second ends of the first, second, third, and fourth planar coils 1, 2, 3, and 4 are connected to the connection terminal portion t1. The opposite second ends of the fifth, sixth, seventh, and eighth planar coils 5, 6, 7, and 8 are connected to the connection terminal portion t2.

The coil assembly 100 has opposite end surfaces in the positive and negative Z-axis directions. Each of the connection terminal portions t1 and t2 is exposed on both the end surfaces of the coil assembly 100 in the positive and negative Z-axis directions. The connection terminal portions t1 and t2 are connected to the power transmission apparatus 200 through an unillustrated capacitor.

As illustrated in Fig. 3, the first planar coil 1 and the eighth planar coil 8 are connected in series to constitute a coil member *a*. Similarly, the second planar coil 2 and the seventh planar coil 7 are connected in series to constitute a coil member *b*. The third planar coil 3 and the sixth planar coil 6 are connected in series to constitute a coil member *c*. The fourth planar coil 4 and the fifth planar coil 5 are connected in series to constitute a coil member *d*. The coil members *a*, *b*, *c*, and *d* are connected in parallel to one another. A current flowing through the coil member *a* will be referred to as a current *Ia*, a current flowing through the coil member *b* will be referred to as a current *Ib*, a current flowing through the coil member *c* will be referred to as a current *Ic*, and a current flowing through the coil member *d* will be referred to as a current *Id*. The parallel connection of the coil members *a* to *d* enables each wire to have a thinner width, making it possible to suppress the occurrence of eddy currents and thereby improve power transmission efficiency of the coil assembly 100. In Fig. 3, the magnetic member 110 and the shield member 112 are omitted.

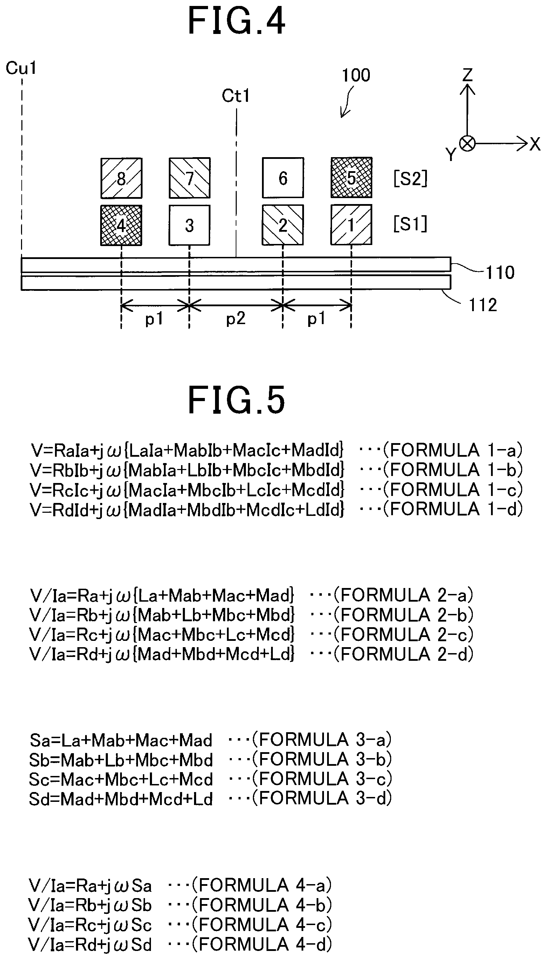

Fig. 4 illustrates a cross section taken along line IV-IV of Fig. 1.

As illustrated in Fig. 4, the wire array of the one-turn wires of the first to fourth planar coils 1 to 4 of the first coil layer S1 has a width, which will be referred to as a "coil width." More specifically, the coil width of the wire array of the one-turn wires of the first to fourth planar coils 1 to 4 of the first coil layer S1 is defined as a minimum distance between the innermost wire of the array of the one-turn wires of the first to fourth planar coils 1 to 4 and the outermost wire of the array of the one-turn wires of the first to fourth planar coils 1 to 4.

The coil width of the one-turn wires of the first to fourth planar coils 1 to 4 of the first coil layer S1 has a central position Ct1.

Among the one-turn wires of the first to fourth planar coils 1 to 4 of the first coil layer S1, the pair of wires of the first and second planar coils 1 and 2 located outward in the direction of the coil width will be referred to as a first outer widthwise wire pair (1, 2), and the pair of wires of the third and fourth planar coils 3 and 4 located outward in the direction of the coil width will be referred to as a second outer widthwise wire pair (3, 4).

That is, the first outer widthwise wire pair (1, 2) located outward in the direction of the coil width means that the first outer widthwise wire pair (1, 2) is located farther from the central portion Ct1 of the coil width in the first embodiment. Similarly, the second outer widthwise wire pair (3, 4) located outward in the direction of the coil width means that the second outer widthwise wire pair (3, 4) is located farther from the central portion Ct1 of the coil width in the first embodiment.

The pitch of any two wires will be referred to as a distance in the width direction between (i) the center of one of the wires in the width direction and (ii) the center of the other of the wires in the width direction.

At that time, the first outer widthwise wire pair (1, 2) is arranged such that the pitch of the first outer widthwise wire pair (1, 2) is set to a first pitch *p1*. Similarly, the second outer widthwise wire pair (3, 4) is arranged such that the pitch of the second outer widthwise wire pair (3, 4) is set to the first pitch *p1*. Therefore, the first outer widthwise wire pair (1, 2) and the second outer widthwise wire pair (3, 4) each correspond to a "first-pitch wire pair" in the first embodiment.

On the other hand, among the one-turn wires of the first to fourth planar coils 1 to 4 of the first coil layer S1, the pair of wires of the second and third planar coils 2 and 3 located inward in the direction of the coil width will be referred to as a widthwise inner wire pair (2, 3).

That is, the inner widthwise wire pair (2, 3) located inward in the direction of the coil width means that the inner widthwise wire pair (2, 3) is located closer to the central portion Ct1 of the coil width in the first embodiment.

The widthwise inner wire pair (2, 3) is arranged such that the pitch of the widthwise inner wire pair (2, 3) is set to a second pitch *p2*. Therefore, the widthwise inner wire pair (2, 3) corresponds to a "second-pitch wire pair" in the first embodiment.

As described above, each of the first-pitch wire pairs is located outward of the second-pitch wire pair in the width direction. Advantageous effects provided by the arrangement of the first-pitch wire pairs and the second-pitch wire pair will be described later.

The wire array of the one-turn wires of the fifth to eighth planar coils 5 to 8 of the second coil layer S2 has the same arrangement as that of the wire array of the one-turn wires of the first to fourth planar coils 1 to 4 of the first coil layer S1.

Specifically, the first outer widthwise wire pair (5, 6), which is the pair of wires of the fifth and sixth planar coils 5 and 6 located outward in the direction of the coil width, is arranged such that the pitch of the first outer widthwise wire pair (5, 6) is set to the first pitch *p1*. Similarly, the second outer widthwise wire pair (7, 8), which is the pair of wires of the seventh and eighth planar coils 7 and 8 located outward in the direction of the coil width, is arranged such that the pitch of the second outer widthwise wire pair (7, 8) is set to the first pitch *p1*. Therefore, the first outer widthwise wire pair (5, 6) and the second outer widthwise wire pair (7, 8) each correspond to the "first-pitch wire pair" in the first embodiment.

The widthwise inner wire pair (6, 7) is arranged such that the pitch of the widthwise inner wire pair (6, 7) is set to the second pitch *p2*. Therefore, the widthwise inner wire pair (6, 7) corresponds to the "second-pitch wire pair" in the first embodiment.

The central position Ct1 of the coil width of the wire array constituting the first coil layer S1 aligns with the central position Ct1 of the coil width of the wire array constituting the second coil layer S2.

The second pitch *p2* is greater than the first pitch *p1*. The interval between the wires constituting the second-pitch wire pair is greater than the interval between the wires constituting the first-pitch wire pair. The "interval between wires" is defined as a width of a space defined between adjacent wires.

The following describes the reason why the coil assembly 100 includes the arrangement of the wire array of each of the first and second coil layers S1 and S2 set forth above with reference to Figs. 3 and 5.

Fig. 3 illustrates an equivalent circuit of the coil assembly 100. The equivalent circuit is represented by formulas 1-a, 1-b, 1-c, and 1-d illustrated in the top row of Fig. 5. In each of the formulas 1-a, 1-b, 1-c, and 1-d, *V* represents a terminal voltage across each of the coil members *a* to *d*, *Ra* to *Rd* represent respective resistances of the coil members *a* to *d*, La to Ld represent respective self-inductances of the coil members *a* to *d*, *Mxy* (*x* = *a* to *d*, *y* = *a* to *d*) represent mutual inductances between the coil member *x* and the coil member *y*, and *ω* represents an angular velocity. As described above, *Ia* to *Id* represents currents flowing through the respective coil members *a* to *d*.

When the currents *Ia* to *Id* flow with no bias through the coil members *a* to *d* connected in parallel, *Ia* = *Ib* = *Ic* = *Id*. Therefore, the formulas 1-a to 1-d can be modified to formulas 2-a, 2-b, 2-c, and 2-d illustrated in the second row of Fig. 5.

In each of the formulas 2-a, 2-b, 2-c, and 2-d, when the sum of the self-inductance and the mutual inductances is replaced with a corresponding one of inductance parameters *Sa*, *Sb*, *Sc*, and *Sd* illustrated in the third row of Fig. 5, formulas 4-a, 4-b, 4-c, and 4-d illustrated in the fourth row of Fig. 5 can be obtained.

Specifically, in an ideal state in which the currents *Ia* to *Id* flow with no bias through the coil members *a* to *d* connected in parallel, the left-hand sides of the respective formulas 4-a, 4-b, 4-c, and 4-d are equal to *V*/*Ia*.

To establish such a state with no current bias, it is sufficient that the resistances *Ra*, *Rb*, *Rc*, and *Rd* are equal to one another, and the inductance parameters *Sa*, *Sb*, *Sc*, and *Sd* are equal to one another.

Regarding the resistances *Ra* to *Rd*, the wires used for the respective coil members *a* to *d* have the same thickness, and the line lengths of the coil members *a* to *d* are configured to be equal to one another.

Specifically, as illustrated in Fig. 1, the coil member *a* is comprised of the first planar coil 1 and the eighth planar coil 8 connected in series; the first planar coil 1 is wound at a radially outermost section of the first coil layer S1, and the eighth planar coil 8 is wound at a radially innermost section of the second coil layer S2. In contrast, the coil member *d* is comprised of the fourth planar coil 4 and the fifth planar coil 5 connected in series; the fourth planar coil 4 is wound at a radially innermost section of the first coil layer S1 and the fifth planar coil 5 is wound at a radially outermost section of the second coil layer S2.

Configuring the coil member *a* and the coil member *d* in this manner results in the line length of the coil member *a* and the line length of the coil member *d* being equal to each other.

Similarly, the coil member *b* is comprised of the second planar coil 2 and the seventh planar coil 7 connected in series; the second planar coil 2 is wound at a radially outer section of the first coil layer S1, and the seventh planar coil 7 is wound at a radially inner section of the second coil layer S2. In contrast, the coil member *c* is comprised of the third planar coil 3 and the sixth planar coil 6 connected in series; the third planar coil 3 is wound at a radially inner section of the first coil layer S1 and the sixth planar coil 6 is wound at a radially outer section of the second coil layer S2.

Configuring the coil member *b* and the coil member *c* in this manner results in the line length of the coil member *b* and the line length of the coil member *c* being equal to each other.

In addition, the coil members *a* to *d* are arranged such that the line length of each of the coil members *a* and *d* is equal to that of each of the coil members *b* and *c*.

In the first embodiment, using wires having the same thickness and the same number of turns for the respective coil members *a* to *d* is intended to make the self-inductances *La* to *Ld* included in the inductance parameters *Sa* to *Sd* uniform with one another.

However, the mutual inductance between a pair of coil members located closer to each other becomes greater than that between a pair of coil members located farther from each other.

Specifically, the distance between the coil members *b* and *c* is smaller than the distance between the coil members *a* and *d*, so that the mutual inductance *Mbc* between the coil members *b* and *c* is greater than the mutual inductance *Mad* between the coil members *a* and *d*.

Therefore, the inductance parameters *Sb* and *Sc*, each of which includes the greater mutual inductance *Mbc* in the formula thereof, become greater than the inductance parameters *Sa* and *Sd*, each of which includes the smaller mutual inductance *Mad* in the formula thereof. As a result, differences may arise among the inductance parameters *Sa* to *Sd*.

In view of the above circumstances, the first embodiment makes the first and second pitches *p1* and *p2* different from each other to cause differences in the mutual inductances *Mxy* (*x* = *a* to *d*, *y* = *a* to *d*), thus suppressing the differences among the inductance parameters *Sa* to *Sd*.

Specifically, for the first coil layer S1, the second pitch *p2* between the wire of the second planar coil 2 and the wire of the third planar coil 3 is configured to be greater than each of (i) the first pitch *p1* between the wire of the first planar coil 1 and the wire of the second planar coil 2 and (ii) the first pitch *p1* between the wire of the third planar coil 3 and the wire of the fourth planar coil 4. This configuration reduces the mutual inductance *Mbc*, thereby suppressing the differences among the inductance parameters *Sa* to *Sd*.

This therefore makes it possible to mitigate differences in impedance among the coil members *a* to *d* in the first coil layer S1, thereby reducing loss due to current concentration in a specific coil member.

Similarly, for the second coil layer S2, the second pitch *p2* between the wire of the sixth planar coil 6 and the wire of the seventh planar coil 7 is configured to be greater than each of (i) the first pitch *p1* between the wire of the fifth planar coil 5 and the wire of the sixth planar coil 6 and (ii) the first pitch *p1* between the wire of the seventh planar coil 7 and the wire of the eighth planar coil 8. This configuration reduces the mutual inductance *Mbc*, thereby suppressing the differences among the inductance parameters *Sa* to *Sd*.

This therefore makes it possible to mitigate differences in impedance among the coil members *a* to *d* in the second coil layer S2, thereby reducing loss due to current concentration in a specific coil member.

Additionally, in the coil assembly 100 of the first embodiment, the respective inductance parameters *Sa* to *Sd*, that is, the sums of the self-inductances and the mutual inductances for the respective coil members *a* to *d*, are configured to be substantially equal to each other through the use of adjusted values of the first pitch *p1* and the second pitch *p2*.

The phrase "the sums of the self-inductance and the mutual inductances are equal to each other" has a broad meaning including not only a case where the sums are completely equal to each other but also a case where the relationship between the sums can reduce the differences in the inductance parameters among the coil members *a* to *d* compared to a configuration where the first pitch *p1* and the second pitch *p2* are equal to each other.

### EXAMPLE 1

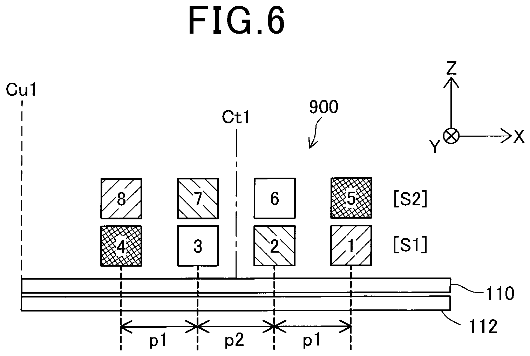

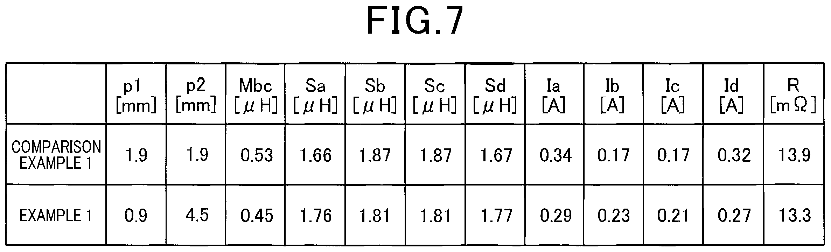

As Example 1, numerical analysis was performed on the coil assembly 100 of the first embodiment illustrated in Fig. 4, and numerical analysis was also performed on a coil assembly 900 of Comparative Example 1 illustrated in Fig. 6. Then, as illustrated in Fig. 7, the mutual inductance *Mbc*, the inductance parameters *Sa* to *Sd*, and the like were numerically analyzed for these coil assemblies 100 and 900 to confirm the advantageous effects of the coil assembly 100.

In Example 1 illustrated in Fig. 4, the distance from a central axis Cu1 (an axial line extending parallel to the Z-axis through a central position of each of the coil layers S1 and S2 when viewed along the Z-axis direction) of each of the coil layers S1 and S2 to the central position Ct1 was set to 20 mm (millimeters). In addition, the thickness of each wire used by the coil assembly 100 was set to 300 µm (micrometers), and the width of each wire was set to 300 µm. Moreover, the coil width was set to 6 mm, and, as illustrated in Fig. 7, the first pitch *p1* was set to 0.9 mm, and the second pitch *p2* was set to 4.5 mm.

The thickness of the magnetic member 110 and the thickness of the shield member 112 were each set to 1 mm. The magnetic member 110 was made of ferrite. In addition, the shapes in a plan view of the planar coils constituting each of the coil layers S1 and S2, the magnetic member 110, and the shield member 112 were each circular. The radius of the magnetic member 110 and the radius of the shield member 112 were each set to 30 mm. A current of 1 A was applied at a frequency of 85 kHz to the coil assembly 100 having the above configuration.

On the other hand, the coil assembly 900 of Comparative Example 1 differs from the coil assembly 100 of Example 1 in that both the first pitch *p1* and the second pitch *p2* are 1.9 mm, and the other configurations are the same.

As illustrated in Fig. 7, configuring the second pitch *p2* to be greater than the first pitch *p1* results in the mutual inductance *Mbc* being reduced. This therefore makes it possible to reduce the inductance parameters *Sb* and *Sc*, thereby suppressing the differences among the inductance parameters *Sa* to *Sd*.

This results in the differences among the currents *Ia* to *Id* decreasing, making it possible to suppress, in Example 1, the AC resistance *R* of the coil assembly 100 to be lower than that in Comparative Example 1.

The coil assembly 100 of the first embodiment described above includes (i) the first-pitch wire pairs, each of which is comprised of paired adjacent wires having the first pitch *p1* therebetween and (ii) the second-pitch wire pair comprised of paired adjacent wires having the second pitch *p2* greater than the first pitch *p1*, wherein each first-pitch wire pair is located outward of the second-pitch wire pair in the direction of the coil width.

This configuration therefore enables the mutual inductance between the coil members located inward in the direction of the coil width to be reduced than the mutual inductance between the coil members located outward in the direction of the coil width. This makes it possible to mitigate differences in impedance between the coil members located inward in the direction of the coil width and the coil members located outward in the direction of the coil width, thereby suppressing current bias among the coil members.

In addition, each of the coil members *a* to *d* is configured such that a planar coil wound at the radially inner section and the planar coil wound at the radially outer section are connected in series. This configuration enables differences in wire line length among the coil members *a* to *d* to be reduced, making it possible to mitigate differences in impedance among the respective coil members *a* to *d.*

In addition, the number of the planar coils constituting each of the coil layers S1 and S2 is "4," that is, an even number. The second-pitch wire pair of the coil layer S1 include the pair of the wire of the second planar coil 2 and the wire of the third planar coil 3, which are located closest to the central position of the coil width. The second-pitch wire pair of the coil layer S2 includes the pair of the wire of the sixth planar coil 6 and the wire of the seventh planar coil 7, which are closest to the central position of the coil width. This therefore enables a coil assembly, such as the coil assembly 100, which has coil layers constituted by an even number of planar coils, to suppress the current bias among the coil members.

In addition, the coil assembly 100 is configured such that the sums of the self-inductance and the mutual inductances for each of the coil members *a* to *d* are equal to each other, making it possible to mitigate differences in impedance among the coil members *a* to *d*.

### Second embodiment

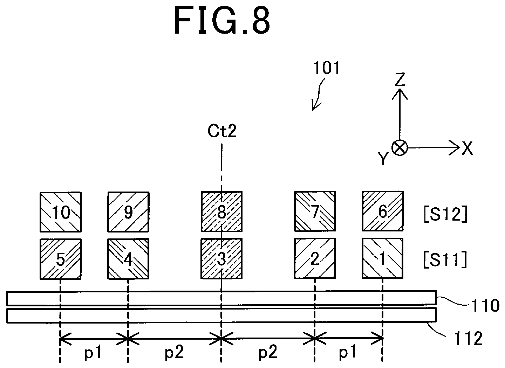

A coil assembly 101 of the second embodiment illustrated in Fig. 8 is substantially identical to the coil assembly 100 of the first embodiment except that the number of planar coils constituting each coil layer is "5", that is, an odd number. The same reference characters are assigned to components of the coil assembly 101 according to the second embodiment identical to those of the coil assembly 100, and therefore detailed descriptions of which are omitted.

### DETAILED CONFIGURATION OF COIL ASSEMBLY 101

Fig. 8 illustrates a cross section of the coil assembly 101, which is taken along a position corresponding to the line IV-IV of Fig. 1.

As illustrated in Fig. 8, the coil assembly 101 includes a first coil layer S11 and a second coil layer S12 are stacked along the Z axis. The first coil layer S11 includes a first planar coil 1, a second planar coil 2, a third planar coil 3, a fourth planar coil 4, and a fifth planar coil 5. The second coil layer S12 includes a sixth planar coil 6, a seventh planar coil 7, an eighth planar coil 8, a ninth planar coil 9, and a tenth planar coil 10. The number of turns of each planar coil 1 to 10 is 1, but may be set to any number.

A central position Ct2 of the coil width in the first coil layer S11 aligns with a central position Ct2 of the coil width in the second coil layer S12. The third planar coil 3 of the first coil layer S11 is located at the central position Ct2 of the first coil layer S11, and the eighth planar coil 8 of the second coil layer S12 is located at the central position Ct2 of the second coil layer S12.

As illustrated in Fig. 6, the first planar coil 1 and the tenth planar coil 10 are connected in series to constitute a coil member *a*. Similarly, the second planar coil 2 and the ninth planar coil 9 are connected in series to constitute a coil member *b*. The third planar coil 3 and the eighth planar coil 8 are connected in series to constitute a coil member *c*. The fourth planar coil 4 and the seventh planar coil 7 are connected in series to constitute a coil member *d*. The fifth planar coil 5 and the sixth planar coil 6 are connected in series to constitute a coil member *e*. The coil members *a*, *b*, *c*, *d*, and *e* are connected in parallel to one another. A current flowing through the coil member *a* will be referred to as a current *Ia*, a current flowing through the coil member *b* will be referred to as a current *Ib*, a current flowing through the coil member *c* will be referred to as a current *Ic*, a current flowing through the coil member *d* will be referred to as a current *Id*, and a current flowing through the coil member *e* will be referred to as a current *Ie*.

Among the one-turn wires of the first to fifth planar coils 1 to 5 of the first coil layer S11, the pair of wires of the first and second planar coils 1 and 2 located outward in the direction of the coil width will be referred to as a first outer widthwise wire pair (1, 2), and the pair of wires of the fourth and fifth planar coils 4 and 5 located outward in the direction of the coil width will be referred to as a second outer widthwise wire pair (4, 5).

At that time, the first outer widthwise wire pair (1, 2) is arranged such that the pitch of the first outer widthwise wire pair (1, 2) is set to the first pitch *p1*. Similarly, the second outer widthwise wire pair (4, 5) is arranged such that the pitch of the second outer widthwise wire pair (3, 4) is set to the first pitch *p1*. Therefore, the first outer widthwise wire pair (1, 2) and the second outer widthwise wire pair (4, 5) each correspond to a "first-pitch wire pair" in the second embodiment.

Similarly, among the one-turn wires of the first to fifth planar coils 6 to 10 of the second coil layer S12, the pair of wires of the sixth and seventh planar coils 6 and 7 located outward in the direction of the coil width will be referred to as a first outer widthwise wire pair (6, 7), and the pair of wires of the ninth and tenth planar coils 9 and 10 located outward in the direction of the coil width will be referred to as a second outer widthwise wire pair (9, 10).

At that time, the first outer widthwise wire pair (6, 7) is arranged such that the pitch of the first outer widthwise wire pair (6, 7) is set to the first pitch *p1*. Similarly, the second outer widthwise wire pair (9, 10) is arranged such that the pitch of the second outer widthwise wire pair (9, 10) is set to the first pitch *p1*. Therefore, the first outer widthwise wire pair (6, 7) and the second outer widthwise wire pair (9, 10) each correspond to the "first-pitch wire pair" in the second embodiment.

On the other hand, among the one-turn wires of the first to fifth planar coils 1 to 5 of the first coil layer S11, the pair of wires of the second and third planar coils 2 and 3 located inward in the direction of the coil width will be referred to as a first widthwise inner wire pair (2, 3), and the pair of wires of the third and fourth planar coils 3 and 4 located inward in the direction of the coil width will be referred to as a second widthwise inner wire pair (3, 4).

At that time, the first widthwise inner wire pair (2, 3) is arranged such that the pitch of the first widthwise inner wire pair (2, 3) is set to the second pitch *p2*, and the second widthwise inner wire pair (3, 4) is arranged such that the pitch of the second widthwise inner wire pair (3, 4) is set to the second pitch *p2*. Therefore, the first widthwise inner wire pair (2, 3) and the second widthwise inner wire pair (3, 4) each correspond to a "second-pitch wire pair" in the second embodiment.

Similarly, among the one-turn wires of the sixth to tenth planar coils 6 to 10 of the second coil layer S12, the pair of wires of the seventh and eighth planar coils 7 and 8 located inward in the direction of the coil width will be referred to as a first widthwise inner wire pair (7, 8), and the pair of wires of the eighth and ninth planar coils 8 and 9 located inward in the direction of the coil width will be referred to as a second widthwise inner wire pair (8, 9).

At that time, the first widthwise inner wire pair (7, 8) is arranged such that the pitch of the first widthwise inner wire pair (7, 8) is set to the second pitch *p2*, and the second widthwise inner wire pair (8, 9) is arranged such that the pitch of the second widthwise inner wire pair (8, 9) is set to the second pitch *p2*. Therefore, the first widthwise inner wire pair (7, 8) and the second widthwise inner wire pair (8, 9) each correspond to the "second-pitch wire pair" in the second embodiment.

### EXAMPLE 2

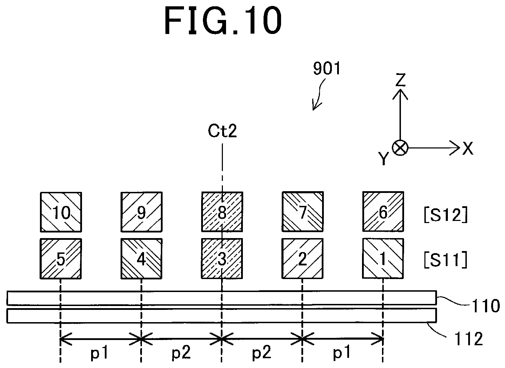

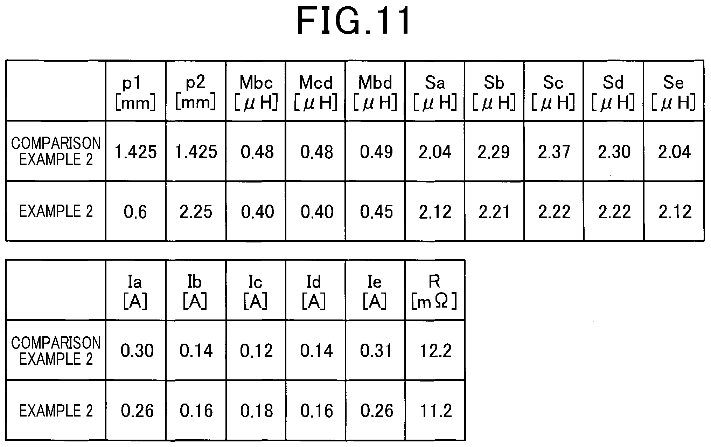

As Example 2, numerical analysis was performed on the coil assembly 101 of the second embodiment illustrated in Fig. 8, and numerical analysis was also performed on a coil assembly 901 of Comparative Example 2 illustrated in Fig. 10. Then, as illustrated in Fig. 11, the mutual inductances *Mbc*, *Mcd*, *Mbd*, the inductance parameters *Sa* to *Se*, and the like were numerically analyzed for these coil assemblies 101 and 901 to confirm the advantages effects of the coil assembly 101.

In Example 2 illustrated in Fig. 11, the first pitch *p1* was set to 0.6 mm, and the second pitch *p2* was set to 2.25 mm.

On the other hand, the coil assembly 901 of Comparative Example 2 differs from the coil assembly 101 of Example 2 in that both the first pitch *p1* and the second pitch *p2* are 1.425 mm, and the other configurations are the same.

As illustrated in Fig. 11, configuring the second pitch *p2* to be greater than the first pitch *p1* results in the mutual inductances *Mbc*, *Mcd*, and *Mbd* being reduced. This therefore makes it possible to reduce the inductance parameters *Sb*, *Sc*, and *Sd*, thereby suppressing the differences among the inductance parameters *Sa* to *Se*.

This results in the differences among the currents *Ia* to *Ie* decreasing, making it possible to suppress, in Example 2, the AC resistance *R* of the coil assembly 101 to be lower than that in Comparative Example 2.

The coil assembly 101 of the second embodiment described above is configured such that the number of the planar coils constituting each of the coil layers S11 and S12 is "5," that is, an odd number. This configuration of the coil assembly 101 of the second embodiment achieves, similarly to the first embodiment, an advantageous benefit of suppressing a current bias among the coil members.

### Third embodiment

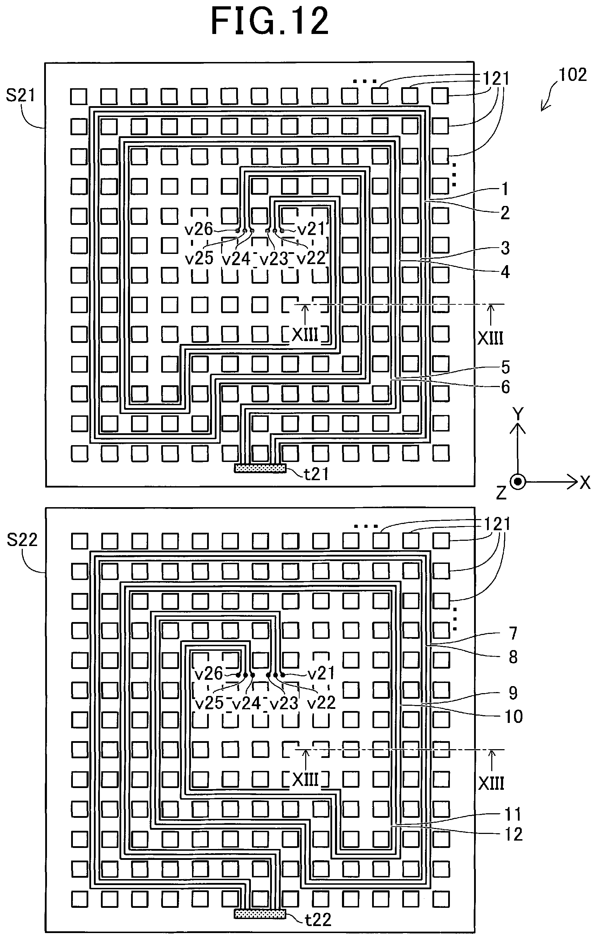

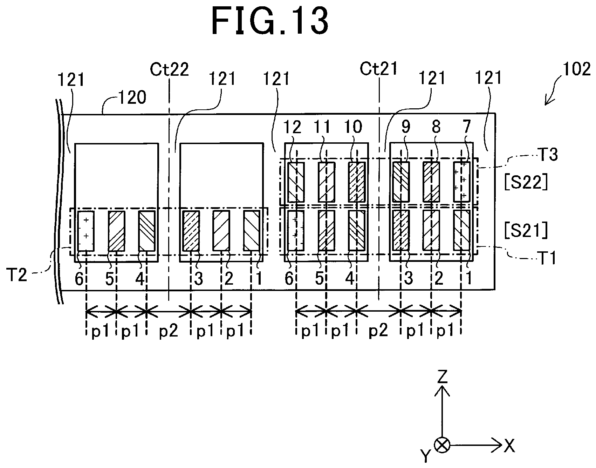

A coil assembly 102 of the third embodiment illustrated in Figs. 12 and 13 is substantially identical to the coil assembly 100 of the first embodiment except that the coil assembly 102 includes a housing 120. The same reference characters are assigned to components of the coil assembly 102 according to the third embodiment identical to those of the coil assembly 100, and therefore detailed descriptions of which are omitted.

As illustrated in Fig. 12, the coil assembly 102 includes a first coil layer S21 and a second coil layer S22 that are stacked along the Z axis. The first coil layer S21 includes a first planar coil 1, a second planar coil 2, a third planar coil 3, a fourth planar coil 4, a fifth planar coil 5, and a sixth planar coil 6, and the second coil layer S22 includes a seventh planar coil 7, an eighth planar coil 8, a ninth planar coil 9, a tenth planar coil 10, an eleventh planar coil 11, and a twelfth planar coil 12. The number of turns of each planar coil 1 to 12 is 1.5, but may be set to any number.

The coil assembly 102 includes through-hole vias v21, v22, v23, v24, v25, and v26 formed through the first and second coil layers S21 and S22 at a central portion thereof. Each of the sixth and seventh planar coils 6 and 7 has a first end connected to the through-hole via v21 to constitute a coil member (6, 7). Each of the fifth and eighth planar coils 5 and 8 has a first end connected to the through-hole via v22 to constitute a coil member (5, 8). Each of the fourth and ninth planar coils 4 and 9 has a first end connected to the through-hole via v23 to constitute a coil member (4, 9). Each of the third and tenth planar coils 3 and 10 has a first end connected to the through-hole via v24 to constitute a coil member (3, 10). Each of the second and eleventh planar coils 2 and 11 has a first end connected to the through-hole via v25 to constitute a coil member (2, 11). Each of the first and twelfth planar coils 1 and 12 has a first end connected to the through-hole via v26 to constitute a coil member (1, 12).

That is, each coil member is comprised of a corresponding respective two planar coils, the number of turns of which is 1.5, connected in series described set forth above. This therefore results in each coil member having the number of turns being 3.

Hereinafter, a first turn of each coil member is referred to as a first turn T1, a second turn of each coil member is referred to as a second turn T2, and a third turn of each coil member is referred to as a third turn T3.

The wire array of each of the first-turn wires, the second-turn wires, and the third-turn wires has a width, which will be referred to as a "coil width.". More specifically, the coil width of the wire array of each of the first-, second-, and third-turn wires is defined as a minimum distance between the innermost wire and the outermost wires of the array of the corresponding one of the first-, second-, and third-turn wires.

The coil width of the wires of the first turn T1 has a central position Ct21, and the coil width of the wires of the third turn T3 also has a central position Ct21 aligning with the central position Ct21 of the first turn T1. The coil width of the wires of the second turn T2 has a central position Ct22.

The first coil layer S21 includes a connection terminal portion t21, and the second coil layer S22 includes a connection terminal portion t22. The opposite second ends of the first, second, third, fourth, fifth, and sixth planar coils 1, 2, 3, 4, 5, and 6 are connected to the connection terminal portion t21. The opposite second ends of the seventh, eighth, ninth, tenth, eleventh, and twelfth planar coils 7, 8, 9, 10, 11, and 12 are connected to the connection terminal portion t22. Each of the connection terminal portions t21 and t22 is exposed on both the end surfaces of the coil assembly 102 in the positive and negative Z-axis directions. The connection terminal portions t21 and t22 are connected to the power transmission apparatus 200 through an unillustrated capacitor.

Fig. 13 illustrates a cross section taken along line XIII-XIII of Fig. 12.

As illustrated in Fig. 13, among the first-turn wires of the first to sixth planar coils 1 to 6, the pair of wires of the third and fourth planar coils 3 and 4 located inward in the direction of the coil width will be referred to as a widthwise inner wire pair (3, 4) of the first turn T1.

Similarly, among the second-turn wires of the first to sixth planar coils 1 to 6, the pair of wires of the third and fourth planar coils 3 and 4 located inward in the direction of the coil width will be referred to as a widthwise inner wire pair (3, 4) of the second turn T2.

At that time, the inner widthwise wire pair (3, 4) of each of the first and second turns T1 and T2 is arranged such that the pitch of the inner widthwise wire pair (3, 4) is set to the second pitch *p2*. Therefore, the inner widthwise wire pair (3, 4) of each of the first and second turns T1 and T2 corresponds to the "second-pitch wire pair" in the third embodiment.

Similarly, among the third-turn wires of the seventh to twelfth planar coils 7 to 12, the pair of wires of the ninth and tenth planar coils 9 and 10 located inward in the direction of the coil width will be referred to as a widthwise inner wire pair (9, 10) of the third turn T3.

At that time, the inner widthwise wire pair (9, 10) of the third turn T3 is arranged such that the pitch of the inner widthwise wire pair (9, 10) is set to the second pitch *p2*. Therefore, the inner widthwise wire pair (9, 10) of the third turn T3 corresponds to the "second-pitch wire pair" in the third embodiment.

That is, the inner widthwise wire pair (3, 4) of the first turn T1 located inward in the direction of the coil width means that the inner widthwise wire pair (3, 4) is located closer to the central portion Ct21 of the coil width in the third embodiment.

Similarly, the inner widthwise wire pair (9, 10) of the third turn T3 located inward in the direction of the coil width means that the inner widthwise wire pair (9, 10) is located closer to the central portion Ct21 of the coil width in the third embodiment.

Additionally, the inner widthwise wire pair (3, 4) of the second turn T2 located inward in the direction of the coil width means that the inner widthwise wire pair (3, 4) is located closer to the central portion Ct22 of the coil width in the third embodiment.

On the other hand, among the first-turn wires of the first to sixth planar coils 1 to 6, (i) the pair of wires of the first and second planar coils 1 and 2, (ii) the pair of wires of the second and third planar coils 2 and 3, (iii) the pair of wires of the fourth and fifth planar coils 4 and 5, and (iv) the pair of wires of the fifth and sixth planar coils 5 and 6 are located outward of the inner widthwise wire pair (3, 4) in the direction of the coil width.

The pair of wires of the first and second planar coils 1 and 2 will be simply referred to as a first widthwise outer wire pair (1, 2) of the first turn T1, and the pair of wires of the second and third planar coils 2 and 3 will be simply referred to as a second widthwise outer wire pair (2, 3) of the first turn T1.

The pair of wires of the fourth and fifth planar coils 4 and 5 will be simply referred to as a third widthwise outer wire pair (4, 5) of the first turn T1, and the pair of wires of the fifth and sixth planar coils 5 and 6 will be simply referred to as a fourth widthwise outer wire pair (5, 6) of the first turn T1.

Similarly, among the second-turn wires of the first to sixth planar coils 1 to 6, (i) the pair of wires of the first and second planar coils 1 and 2, (ii) the pair of wires of the second and third planar coils 2 and 3, (iii) the pair of wires of the fourth and fifth planar coils 4 and 5, and (iv) the pair of wires of the fifth and sixth planar coils 5 and 6 are located outward of the inner widthwise wire pair (3, 4) in the direction of the coil width.

The pair of wires of the first and second planar coils 1 and 2 will be simply referred to as a first widthwise outer wire pair (1, 2) of the second turn T2, and the pair of wires of the second and third planar coils 2 and 3 will be simply referred to as a second widthwise outer wire pair (2, 3) of the second turn T2.

The pair of wires of the fourth and fifth planar coils 4 and 5 will be simply referred to as a third widthwise outer wire pair (4, 5) of the second turn T2, and the pair of wires of the fifth and sixth planar coils 5 and 6 will be simply referred to as a fourth widthwise outer wire pair (5, 6) of the second turn T2.

At that time, each of the first to fourth widthwise outer wire pairs (1, 2), (2, 3), (4, 5), and (5, 6) of the first turn T1 is arranged such that the pitch of the corresponding one of the first to fourth widthwise outer wire pairs (1, 2), (2, 3), (4, 5), and (5, 6) of the first turn T1 is set to the first pitch *p1*.

Similarly, each of the first to fourth widthwise outer wire pairs (1, 2), (2, 3), (4, 5), and (5, 6) of the second turn T2 is arranged such that the pitch of the corresponding one of the first to fourth widthwise outer wire pairs (1, 2), (2, 3), (4, 5), and (5, 6) of the second turn T2 is set to the first pitch *p1*.

Similarly, among the third-turn wires of the seventh to twelfth planar coils 7 to 12, (i) the pair of wires of the seventh and eighth planar coils 7 and 8, (ii) the pair of wires of the eighth and ninth planar coils 8 and 9, (iii) the pair of wires of the tenth and eleventh planar coils 10 and 11, and (iv) the pair of wires of the eleventh and twelfth planar coils 11 and 12 are located outward of the inner widthwise wire pair (9, 10) in the direction of the coil width.

The pair of wires of the seventh and eighth planar coils 7 and 8 will be simply referred to as a first widthwise outer wire pair (7, 8) of the third turn T3, and the pair of wires of the eighth and ninth planar coils 8 and 9 will be simply referred to as a second widthwise outer wire pair (8, 9) of the third turn T3.

The pair of wires of the tenth and eleventh planar coils 10 and 11 will be simply referred to as a third widthwise outer wire pair (10, 11) of the third turn T3, and the pair of wires of the eleventh and twelfth planar coils 11 and 12 will be simply referred to as a fourth widthwise outer wire pair (11, 12) of the third turn T3.

At that time, each of the first to fourth widthwise outer wire pairs (7, 8), (8, 9), (10, 11), and (11, 12) of the third turn T3 is arranged such that the pitch of the corresponding one of the first to fourth widthwise outer wire pairs (7, 8), (8, 9), (10, 11), and (11, 12) of the third turn T3 is set to the first pitch *p1*.

That is, each outer widthwise wire pair (1, 2), (2, 3), (4, 5), and (5, 6) of the first turn T1 located outward of the inner widthwise wire pair (3, 4) in the direction of the coil width means that each outer widthwise wire pair (1, 2), (2, 3), (4, 5), and (5, 6) of the first turn T1 is located farther from the central portion Ct21 of the coil width in the third embodiment.

Similarly, each outer widthwise wire pair (7, 8), (8, 9), (10, 11), and (11, 12) of the third turn T3 located outside the inner widthwise wire pair (9, 10) in the direction of the coil width means that each outer widthwise wire pair (7, 8), (8, 9), (10, 11), and (11, 12) of the third turn T3 is located farther from the central portion Ct21 of the coil width in the third embodiment.

Additionally, each outer widthwise wire pair (1, 2), (2, 3), (4, 5), and (5, 6) of the second turn T2 located outward of the inner widthwise wire pair (3, 4) in the direction of the coil width means that each outer widthwise wire pair (1, 2), (2, 3), (4, 5), and (5, 6) of the second turn T2 is located farther from the central portion Ct22 of the coil width in the third embodiment.

The housing 120 includes, as illustrated in Fig. 12, a plurality of support poles 121 arranged at regular intervals along the X and Y axes directions. Each of the support poles 121 extends in the Z-axis direction. The housing 120 is configured to accommodate the first coil layer S21 and the second coil layer S22.

More specifically, the first coil layer S21 is accommodated in the housing 120 such that (i) one of the support poles 121 is arranged between the pair of wires of the third and fourth planar coils 3 and 4 of the first turn T1 constituting the second-pitch wire pair (3, 4), and (ii) one of the support poles 121 is arranged between the pair of wires of the third and fourth planar coils 3 and 4 of the second turn T2 constituting the second-pitch wire pair (3, 4).

Because the interval between the wires of the third and fourth planar coils 3 and 4 of each turn T1, T2 constituting the second-pitch wire pair (3, 4) is greater than that between the wires constituting the first-pitch wire pair, one of the support poles 121 is more likely to be arranged between the wires of the third and fourth planar coils 3 and 4 of each turn T1, T2 constituting the second-pitch wire pair (3, 4) than between the wires constituting the first-pitch wire pair.

Similarly, the second coil layer S22 is accommodated in the housing 120 such that one of the support poles 121 is arranged between the pair of wires of the ninth and tenth planar coils 9 and 10 of the third turn T3 constituting the second-pitch wire pair (9, 10). In Fig. 13, the magnetic member 110 and the shield member 112 are omitted.

The coil assembly 102 of the third embodiment described above achieves advantageous benefits that are similar to those achieved in the first embodiment.

Additionally, the coil assembly 102 includes the housing 120 that includes the poles 121, each of which extends in the stack direction. Each of the first and second coil layers S21 and S22 is accommodated in the housing 120 such that one of the support poles 121 is arranged between each pair of wires constituting the second-pitch wire pair. This configuration results in the intervals at which the support poles 121 are arranged in the space inside the housing 120 being reduced as compared with a configuration in which a support pole is provided for each turn of the wires. This therefore makes it possible to improve the strength of the coil assembly 102 against an external force applied to the housing 120 along a direction parallel to the Z-axis direction, thus protecting the coil layers from the external force.

In addition, because the interval between the wires constituting the second-pitch wire pair is greater than that between the wires constituting the first-pitch wire pair, one of the support poles 121 can be more easily arranged between the wires constituting the second-pitch wire pair compared to between the wires constituting the first-pitch wire pair.

### Modifications

In each of the above embodiments, the pitch between the wires constituting each of the first-pitch wire pairs is set to the first pitch *p1*, so that the pitches of the wires of the respective first-pitch wire pairs are the same, but the present disclosure is not limited thereto. Specifically, the pitch between the wires constituting each of the first-pitch wire pairs may be individually set to any pitch smaller than the second pitch *p2*. This modification of each of the above embodiments achieves advantageous benefits that are similar to those achieved by the corresponding one of the above embodiments.

In each of the above embodiments, the pitch between the wires constituting each of the second-pitch wire pairs is set to the second pitch *p2*, so that the pitches of the wires of the respective second-pitch wire pairs are the same, but the present disclosure is not limited thereto. Specifically, the pitch between the wires constituting each of the second-pitch wire pairs may be individually set to any pitch greater than the first pitch *p1*. This modification of each of the above embodiments achieves advantageous benefits that are similar to those achieved by the corresponding one of the above embodiments.

Each of the pair of wires of the second and third planar coils 2 and 3 and the pair of wires of the fourth and fifth planar coils 4 and 5 according to the third embodiment is configured as the first-pitch wire pair having the first pitch *p1*, but the present disclosure is not limited thereto. Specifically, each of the pair of wires of the second and third planar coils 2 and 3 and the pair of wires of the fourth and fifth planar coils 4 and 5 according to the third embodiment may be configured as the second-pitch wire pair having the second pitch *p2*.

Similarly, each of the pair of wires of the eighth and ninth planar coils 8 and 9 and the pair of wires of the tenth and eleventh planar coils 10 and 11 according to the third embodiment may be configured not as the first-pitch wire pair having the first pitch *p1* but as the second-pitch wire pair having the second pitch *p2*.

One of the poles 121 is arranged between the wires constituting each second-pitch wire pair according to the third embodiment, but the present disclosure is not limited thereto. Specifically, one of the poles 121 may be arranged between the wires constituting each first-pitch wire pair. This modification makes it possible to improve the strength of the coil assembly 102 against an external force applied to the housing 120 along a direction parallel to the Z-axis direction as compared with a configuration of a coil assembly in which no support poles are provided, thus protecting the coil layers from the external force.

Each of two or more coil layers according to each of the above embodiments includes at least one first-pitch wire pair and at least one second-pitch wire pair, but the present disclosure is not limited thereto. Specifically, a part of the two or more coil layers may include at least one first-pitch wire pair and at least one second-pitch wire pair, and the pitches of the respective wire pairs constituting the remaining of the two or more coil layers may be set to be identical to one another. This modification also suppresses the current bias among the coil members as compared with a configuration in which the pitches of the respective wire pairs constituting all the coil layers may be set to be identical to one another.

Each of the coil layers according to each of the above embodiments includes an odd number of planar coils or an even number of planar coils, but the present disclosure is not limited thereto. Specifically, if the coil assembly according to a modification includes four coil layers, each of two coil layers included in the four coil layers may include an even number of planar coils, and each of the remaining two coil layers may include an odd number of planar coils. This modification of each of the above embodiments achieves advantageous benefits that are similar to those achieved by the corresponding one of the above embodiments.

Each coil layer according to each of the above embodiments is configured such that insulators, such as prepreg insulators, are sandwiched between a respective pair of the patterns of the planar coils, each of which is formed of copper foil, but the present disclosure is not limited thereto. Specifically, each coil layer according to a modification may be formed of a wound litz wire. This modification of each of the above embodiments achieves advantageous benefits that are similar to those achieved by the corresponding one of the above embodiments.

In each of the above embodiments, the central position of the coil width of one-turn wires constituting one of two stacked coil layers aligns with that of the coil width of one-turn wires constituting the other coil layer, but the present disclosure is not limited thereto. Specifically, the central position of the coil width of one-turn wires constituting one of the two stacked coil layers may be offset from that of the coil width of one-turn wires constituting the other coil layer. This modification of each of the above embodiments achieves advantageous benefits that are similar to those achieved by the corresponding one of the above embodiments.

The coil assemblies 100 to 103 of the respective embodiments are merely examples, and various modifications may be made thereto. For example, in each of the coil layers S1, S2, S11, S12, S21, and S22, the shape in a plan view (the shape when viewed along the Z-axis direction) does not have to be a rectangle as in each of the embodiments, and may be, for example, a circle, an ellipse, or a rectangle with rounded corners having radii R provided at the four corners. In addition, the number of the coil layers is not limited to two, and may be any plurality of numbers.

The present disclosure is not limited to the above embodiments, and can be implemented by various configurations within the scope of the present disclosure. For example, technical features included in the embodiments, which correspond to technical features included in exemplary measures described in the SUMMARY of the present disclosure, can be freely combined with each other or can be freely replaced with another feature in order to solve a part or all of the above issue and/or achieve a part or all of the above advantageous benefits. One or more of the technical features included in the above exemplary embodiment, which are not described as essential elements in the specification, can be deleted as necessity arises.

### [FIRST EXEMPLARY ASPECT]

A coil assembly (100, 101, 102) according to the first exemplary aspect includes a plurality of coil layers (S1, S2, S11, S12, S21, S22) stacked along a stack direction. Each of the coil layers includes a plurality of planar coils (1 to 8, 1 to 10, 1 to 12). Each of the planar coils is wound in a direction of a predetermined plane. The predetermined plane intersects the stack direction. The planar coils are connected in parallel to one another. The planar coils included in the coil layers constitute a plurality of coil members (*a* to *d*, *a* to *e*) connected in parallel to one another. Each of the coil members includes at least one of the planar coils included in the coil layers.

At least part of the coil layers includes at least one first-pitch wire pair comprising paired adjacent wires having a first pitch therebetween, and at least one second-pitch wire pair comprising paired adjacent wires having a second pitch that is greater than the first pitch. The at least one first-pitch wire pair being located outward of the at least one second-pitch wire pair in a direction of a width of the at least part of the coil layers.

### [SECOND EXEMPLARY ASPECT]

In the coil assembly according to the second exemplary aspect, which depends from the first exemplary aspect, the paired adjacent wires of the at least one first-pitch wire pair have a first interval therebetween. The paired adjacent wires of the at least one second-pitch wire pair have a second interval therebetween. The second interval is greater than the first interval.

### [THIRD EXEMPLARY ASPECT]

The coil assembly according to the third exemplary aspect, which depends from the first exemplary aspect, further includes a housing (120) that accommodates the coil layers and includes at least one support pole (121) extending along the stack direction. The at least one support pole is arranged between the paired adjacent wires of the at least one second-pitch wire pair.

### [FOURTH EXEMPLARY ASPECT]

In the coil assembly according to the fourth exemplary aspect, which depends from any one of the first to third exemplary aspects, the coil layers include at least a first coil layer and a second coil layer. Each of the coil members is configured such that a corresponding first planar coil selected from the planar coils included in the first coil layer and a corresponding second planar coil selected from the planar coils included in the second coil layer are connected in series to each other. One of the first and second planar coils constituting each of the coil members is wound at a radially inner section of one of the first and second coil layers. The other of the first and second planar coils constituting each of the coil members is wound at a radially outer section of the other of the first and second coil layers.

### [FIFTH EXEMPLARY ASPECT]

In the coil assembly according to the fifth exemplary aspect, which depends from any one of the first to fourth exemplary aspects, the number of one or more of the planar coils, which constitute the at least part of the coil layers, is an even number, and the paired adjacent wires of the at least one second-pitch wire pair are located closest to a central position of the width of the at least part of the coil layers.

### [SIXTH EXEMPLARY ASPECT]

In the coil assembly according to the sixth exemplary aspect, which depends from any one of the first to fourth exemplary aspects, the sums of self-inductances and mutual inductances for the respective coil members are equal to one another.

## Claims

1. A coil assembly (100, 101, 102) comprising:
a plurality of coil layers (S1, S2, S11, S12, S21, S22) stacked along a stack direction, each of the coil layers including a plurality of planar coils (1 to 8, 1 to 10, 1 to 12), each of the planar coils being wound in a direction of a predetermined plane, the predetermined plane intersecting the stack direction, the planar coils being connected in parallel to one another,
the planar coils included in the coil layers constituting a plurality of coil members connected in parallel to one another, each of the coil members comprising at least one of the planar coils included in the coil layers,
at least part of the coil layers including:
at least one first-pitch wire pair comprising paired adjacent wires having a first pitch therebetween; and
at least one second-pitch wire pair comprising paired adjacent wires having a second pitch that is greater than the first pitch,
the at least one first-pitch wire pair being located outward of the at least one second-pitch wire pair in a direction of a width of the at least part of the coil layers.

2. The coil assembly according to claim 1, wherein:
the paired adjacent wires of the at least one first-pitch wire pair have a first interval therebetween;
the paired adjacent wires of the at least one second-pitch wire pair have a second interval therebetween; and
the second interval is greater than the first interval.

3. The coil assembly according to claim 2, further comprising:
a housing (120) that accommodates the coil layers and comprises at least one support pole (121) extending along the stack direction, wherein:
the at least one support pole is arranged between the paired adjacent wires of the at least one second-pitch wire pair.

4. The coil assembly according to any one of claims 1 to 3, wherein:
the coil layers include at least a first coil layer and a second coil layer;
each of the coil members is configured such that a corresponding first planar coil selected from the planar coils included in the first coil layer and a corresponding second planar coil selected from the planar coils included in the second coil layer are connected in series to each other;
one of the first and second planar coils constituting each of the coil members is wound at a radially inner section of one of the first and second coil layers; and
the other of the first and second planar coils constituting each of the coil members is wound at a radially outer section of the other of the first and second coil layers.

5. The coil assembly according to any one of claims 1 to 3, wherein:
the number of one or more of the planar coils, which constitute the at least part of the coil layers, is an even number; and
the paired adjacent wires of the at least one second-pitch wire pair are located closest to a central position of the width of the at least part of the coil layers.

6. The coil assembly according to any one of claims 1 to 3, wherein:
the sums of self-inductances and mutual inductances for the respective coil members are equal to one another.
